# EUROPEAN PATENT APPLICATION

(11) **EP 1 739 239 A1**
(43) Date of publication of application: **03.01.2007**
(21) Application number: 05425465.1
(22) Date of filing: 30.06.2005
(51) Int. Cl.: E02F 9/16, B62D 33/06

(54) **An earth moving machine**

(71) Applicant: Komatsu Utility Europe S.p.A., 36025 Noventa Vicentina (Vicenza) (IT)
(72) Inventor: Muraro, Umberto, 36025 Noventa Vicentina (Vicenza) (IT)
(74) Representative: Ponchiroli, Simone

(57) **Abstract**

An earth moving machine comprising a cab (5) with a structure (6) delimited by a plurality of side walls (7) and an upper wall (8). At least one of the side walls (7) having a window (9) that can be opened which is mobile between a first, closed position in which it at least partly forms the relative side wall (7), and a second, open position in which it is at least partly opposite and under the upper wall (8). At least a first actuator (17) is operatively connected between the window (9) that can be opened and the structure (6) to move the window (9) that can be opened between the first, closed position and the second, open position. At least one control part which can be operated by an operator is mounted in the cab (5) and is operatively connected to the first actuator (17) to control its activation for moving the window (9).

## Description

The present invention relates to an earth moving machine with a cab which has at least one window that can be opened, mobile between a first, closed position and a second, open position in which it is opposite and under the roof of the cab.

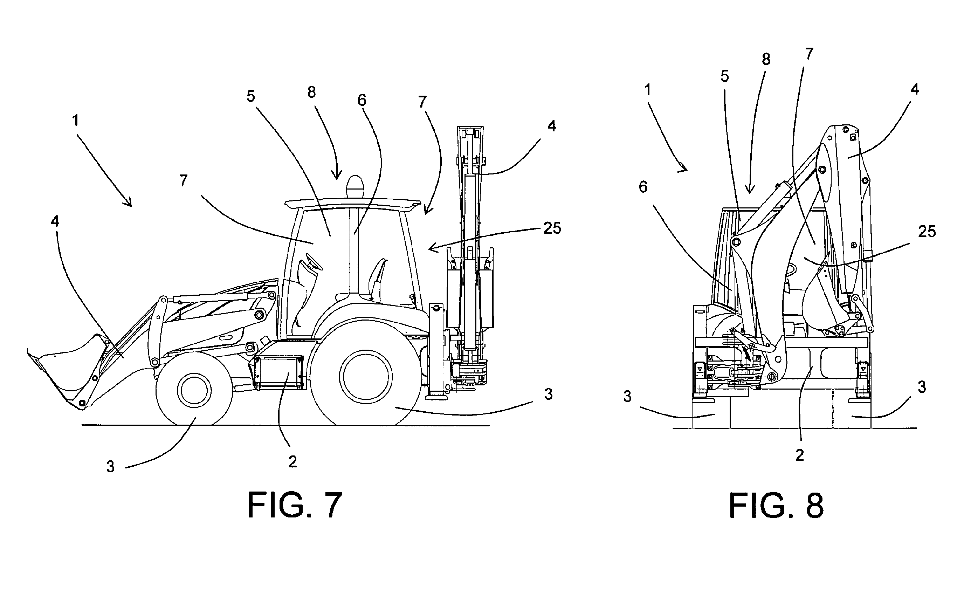

In particular, the present invention is intended for application relative to the rear pane of the cabs of backhoe loaders (Figures 7 and 8), which usually constitutes as a whole a window that can be opened according to the above-mentioned methods.

At present, said rear pane can be moved manually between the closed position and the open position using two side handles. In some cases there may be pneumatic springs to facilitate its movement by the operator and prevent its accidental closing.

Whatever the case, it is awkward for the operator to move the pane, on one hand because the pane is relatively large and heavy, and on the other hand because moving it is quite awkward due to the relatively limited space in the cabs.

Another disadvantage of the windows described above is the fact that they cannot be partly opened. If partly opened, the weight of the windows would close them again.

In this situation the technical need which forms the basis of the present invention is to provide an earth moving machine which overcomes the above-mentioned disadvantages.

In particular, the technical need of the present invention is to provide an earth moving machine in which a window of the type described above can easily be opened by any operator.

Another technical need of the present invention is to provide an earth moving machine in which the cab window can also be only partly opened.

The technical need specified and the aims indicated are substantially achieved by an earth moving machine as described in the claims herein.

Further features and the advantages of the present invention are more clearly illustrated in the detailed description which follows, with reference to the accompanying drawings, which illustrate several preferred embodiments of an earth moving machine, without limiting the scope of the inventive concept, in which:
- Figure 1 is a three-quarter partial axonometric view of a cab of an earth moving machine made in accordance with a first embodiment of the present invention;
- Figure 2 is a side view with further parts cut away of the cab illustrated in Figure 1 with a window in a first operating position;
- Figure 3 is a view of the cab illustrated in Figure 2 with the window in a second operating position;
- Figure 4 is a three-quarter partial axonometric view of a cab of an earth moving machine made in accordance with a second embodiment of the present invention;
- Figure 5 is a side view with further parts cut away of the cab illustrated in Figure 4 with a window in a first operating position;
- Figure 6 is a view of the cab illustrated in Figure 5 with the window in a second operating position;
- Figure 7 is a side view of an earth moving machine for which the present invention is intended; and
- Figure 8 is a rear view of the earth moving machine illustrated in Figure 7.

With reference to the accompanying drawings, the numeral 1 denotes as a whole an earth moving machine according to the present invention. The accompanying drawings illustrate a backhoe loader which is the type of earth moving machine 1 for which the present invention is preferably intended. The earth moving machine 1 comprises a chassis 2 mounted on wheels 3 (Figures 8 and 9) or tracks (not illustrated) and bearing one or more operating arms 4.

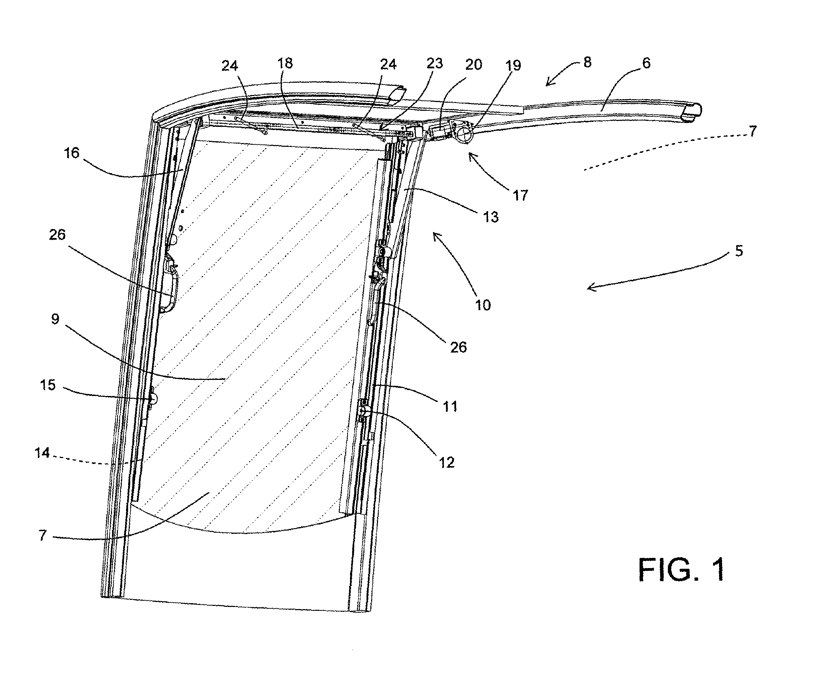

On the chassis 2 a control cab 5 is also mounted, having a structure 6 delimited by a plurality of side walls 7 and by an upper wall 8 (Figures 1 to 7 only illustrate the side wall 7 involved in the present invention, the others being cut away for greater clarity).

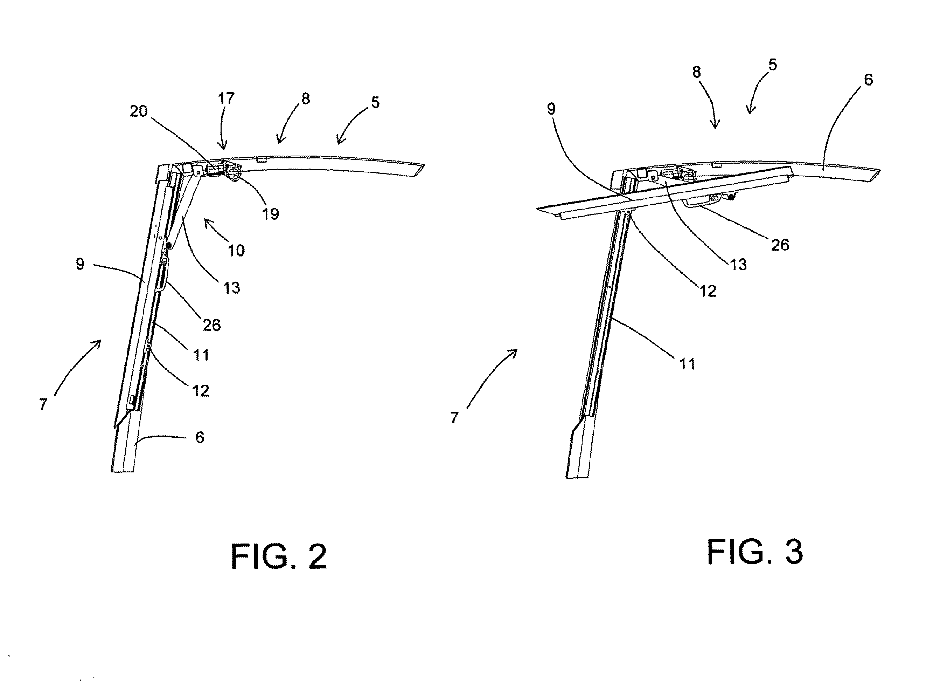

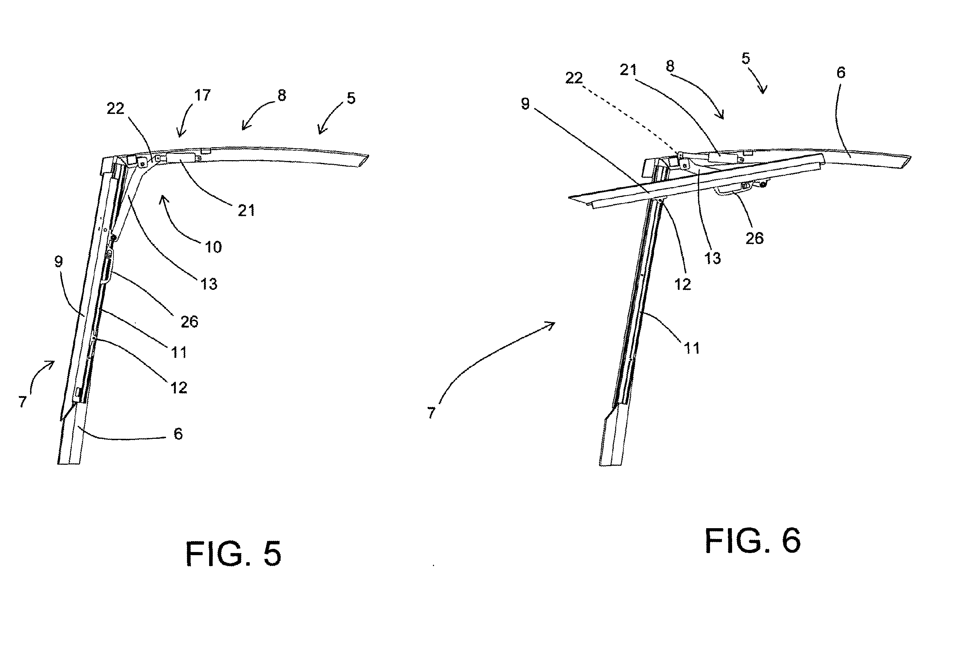

At least one of the side walls 7 of the cab 5 has a window 9 that can be opened, mobile between a first, closed position in which it at least partly forms the relative side wall 7 (Figures 2 and 5) and a second, open position in which it is at least partly opposite and under the upper wall 8 (Figures 3 and 6).

As it passes from the first position to the second position, the window 9 performs a combined rototranslation movement.

For this purpose, the cab 5 comprises guide means 10 which guide the movement of the window 9 between the first position and the second position.

As illustrated in the accompanying drawings, the guide means 10 comprise firstly at least a first side guide 11 located at the side of the window 9 when the window is in the first position, and at least a first engagement element 12 integral with the window 9 and slidably inserted in the first guide 11. The guide means also comprise a first lever 13 pivoting between the cab 5 structure 6 and the window 9. The first lever 13 is connected to the window 9 higher up than the first engagement element 12, and is connected to the structure 6 close to the upper wall 8.

Therefore, when the window 9 passes from the closed position to the open position, the first engagement element 12 slides upwards along the first guide 11, whilst the lever turns about the pivot point at the structure 6, towards the inside of the cab 5 (Figures 3 and 6).

In the preferred embodiment, the guide means 10 have a mirrored configuration on the two sides of the window 9. Therefore, they also comprise at least a second side guide 14 located at the side of the window 9 when the window is in the first position, on a side opposite the first guide 11, and at least a second engagement element 15 integral with the window 9 and slidably inserted in the second guide 14. There is also a second lever 16 pivoting at the structure 6 and the window 9 (at a point higher than the second engagement element 15).

In accordance with the present invention, at least a first actuator 17 is operatively connected between the window 9 that can be opened and the structure 6 to move the window 9 that can be opened between the first, closed position and the second, open position. Activation of the first actuator 17 is controlled by at least one control part (not illustrated) which can be operated by an operator and is mounted inside the cab 5. This control part (for example consisting of a push-button) may be operatively connected to the first actuator 17 by an electrical, hydraulic or pneumatic connection, to control its activation and move the window 9. Advantageously, the control part is located in the cab 5 in a position which forces the operator to remain outside of the operating range of the window 9 during the opening and closing operations. Moreover, the control part preferably requires direct activation by the operator for the duration of the window 9 movement (to prevent accidental window 9 operation).

In a preferred embodiment of the present invention, the actuator 17 is operatively connected to the first lever 13 to turn the lever between a first position in which the window 9 is in its first position and a second position in which the window 9 is in its second position.

Advantageously, when there are two levers 13, 16, the guide means 10 also comprise at least one rigid connecting bar 18 mounted between the first and the second levers 13, 16 to transmit to the second lever 16 the motion imparted by the actuator 17 to the first lever 13.

In Figures 1 to 3, the actuator 17 comprises an electric motor 19 and a mechanical transmission 20 with a suitable reduction unit, so that it guarantees the window 9 passage from the first position to the second position in several second (e.g.: 5 or 10).

In other embodiments, not illustrated, the actuator 17 comprises a hydraulic motor which may or may not have a relative transmission/reduction unit.

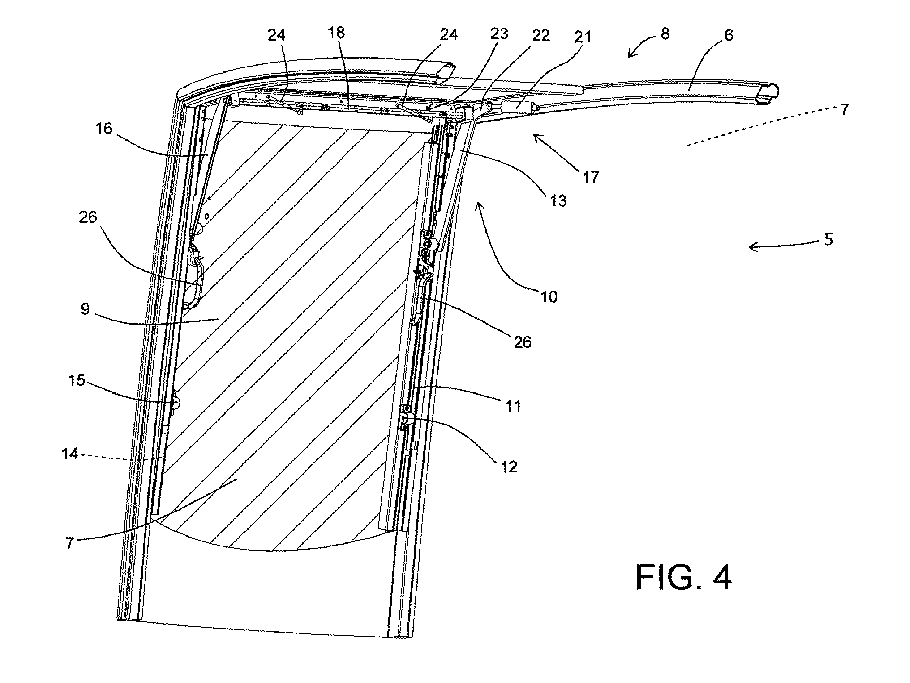

In contrast, in the embodiment illustrated in Figures 4 to 6, the actuator 17 consists of a pneumatic or hydraulic cylinder 21.

Advantageously, the cylinder 21 operates between the cab 5 structure 6 and an extension 22 of the lever 13 extending past the point where the lever 13 pivots at the structure 6.

Moreover, in the embodiments illustrated, the cab 5 also comprises means 23 which oppose accidental movement of the window 9. In particular, these means consist of at least one pneumatic spring 24 (in the two accompanying drawings) connected between the structure 6 and the bar 18 which connects the first and the second levers 13, 16.

Moreover, advantageously, the actuator 17 is positioned at an upper corner of the inner volume of the cab 5, so that it does not interfere with the normal operations of an operator sitting in the cab 5 (Figures 1 and 4).

As indicated above, the present invention is preferably intended for application on backhoe loaders (Figures 7 and 8), in which the window 9 that can be opened substantially consists of the entire pane forming the rear wall 25 of the cab 5, facing the rear operating arm 4.

Finally, the window 9 that can be opened has one or two handles 26 which allow it to be opened and closed manually if the actuator 17 develops a fault.

Operation of the present invention derives directly from the above structural description.

The operator can use the control part to operate the actuator to control pane opening or closing. The actuator, in turn, causes the first and the second levers to turn and consequently rototranslation of the window.

The present invention brings important advantages.

In the earth moving machine made in accordance with the present invention, the window can easily be opened by any operator in any operating situation.

Moreover, thanks to the use of the actuator, the window can also be only partly opened. Once actuator activation ends, the mechanical connection between the window and the actuator guarantees the stability of the window in the position in which it is located.

It should also be noticed that the present invention is relatively easy to produce and even the cost linked to implementation of the invention is not very high.

The invention described may be subject to modifications and variations without thereby departing from the scope of the inventive concept.

All details of the invention may be substituted by other technically equivalent elements and in practice all of the materials used, as well as the shapes and dimensions of the various components, may be any according to requirements.

## Claims

1. An earth moving machine comprising a cab (5) with a structure (6) delimited by a plurality of side walls (7) and an upper wall (8), at least one of the side walls (7) having a window (9) that can be opened which is mobile between a first, closed position in which it at least partly forms the relative side wall (7), and a second, open position in which it is at least partly opposite and under the upper wall (8), the earth moving machine being **characterised in that** it also comprises:
at least a first actuator (17) operatively connected between the window (9) that can be opened and the structure (6) to move the window (9) that can be opened between the first, closed position and the second, open position.
at least one control part which can be operated by an operator, mounted in the cab (5), and
operatively connected to the first actuator (17) to control its activation for moving the window (9).

2. The earth moving machine according to claim 1, also comprising guide means (10) for guiding the movement of the window (9) between the first position and the second position.

3. The earth moving machine according to claim 2, **characterised in that** the guide means (10) comprise at least a first side guide (11) located at the side of the window (9) when the window is in the first position, at least a first engagement element (12) integral with the window (9) and slidably inserted in the first guide (11), and at least a first lever (13) pivoting between the structure (6) and the window (9), the first lever (13) being connected to the window (9) higher up than the first engagement element (12).

4. The earth moving machine according to claim 3, **characterised in that** the guide means (10) also comprise at least a second side guide (14) located at the side of the window (9) when the window is in the first position, on a side opposite the first guide (11), at least a second engagement element (15) integral with the window (9) and slidably inserted in the second guide (14), and at least a second lever (16) pivoting between the structure (6) and the window (9), the second lever (16) being connected to the window (9) higher up than the second engagement element (15).

5. The earth moving machine according to claim 3, **characterised in that** the actuator (17) is operatively connected to the first lever (13) to turn the lever between a lever first position in which the window (9) is in its first position and a lever second position in which the window (9) is in its second position.

6. The earth moving machine according to claim 4, **characterised in that** the actuator (17) is operatively connected to the first lever (13) to turn the lever between a lever first position in which the window (9) is in its first position and a lever second position in which the window (9) is in its second position.

7. The earth moving machine according to claim 6, **characterised in that** the guide means (10) also comprise at least one connecting bar (18) between the first lever and the second lever (16) to transmit to the second lever (16) the motion imparted by the actuator (17) to the first lever (13).

8. The earth moving machine according to any of the foregoing claims, **characterised in that** the actuator (17) comprises an electric motor (19) and a transmission.

9. The earth moving machine according to any of the foregoing claims from 1 to 7, **characterised in that** the actuator (17) comprises a hydraulic motor.

10. The earth moving machine according to any of the foregoing claims, **characterised in that** the actuator (17) is a pneumatic or hydraulic actuator (17).

11. The earth moving machine according to claims 5 and 10, **characterised in that** the first lever (13) has an extension (22) past the point where it pivots at the structure (6) and the pneumatic or hydraulic actuator (17) operates on the extension (22).

12. The earth moving machine according to any of the foregoing claims, also comprising means (23) which oppose window (9) movement.

13. The earth moving machine according to claim 12, **characterised in that** the means (23) which oppose window movement consist of at least one pneumatic spring (24).

14. The earth moving machine according to any of the foregoing claims, **characterised in that** the actuator (17) is positioned at an upper corner of the inner volume of the cab (5).

15. The earth moving machine according to any of the foregoing claims, **characterised in that** it is a backhoe loader and the window (9) is part of a cab (5) rear wall.

## Amended claims

### Amended claims in accordance with Rule 86(2) EPC.

**1.** An earth moving machine comprising a cab (5) with a structure (6) delimited by a plurality of side walls (7) and an upper wall (8), at least one of the side walls (7) having a window (9) that can be opened which is mobile between a first, closed position in which it at least partly forms the relative side wall (7), and a second, open position in which it is at least partly opposite and under the upper wall (8), the earth moving machine being **characterised in that** it also comprises:
at least a first ***controlled*** actuator (17) operatively connected between the window (9) that can be opened and the structure (6), ***the first actuator being able*** to move the window (9) that can be opened between the first, closed position and the second, open position ***and vice versa;***
at least one control part which can be operated by an operator, mounted in the cab (5), and connected to the first actuator (17) ; ***the*** activation ***of said first actuator*** for moving the window (9) ***being controlled through said control part.***

**2.** The earth moving machine according to claim 1, also
